# EUROPÄISCHE PATENTSCHRIFT

(11) **EP 1 199 489 B1**
(45) Veröffentlichungstag und Bekanntmachung des Hinweises auf die Patenterteilung: **29.12.2004**
(21) Anmeldenummer: 00122815.4
(22) Anmeldetag: 20.10.2000
(51) Int. Cl.: F16D 23/04

(54) **Synchronisiertes Schaltgetriebe und Konusring hierfür**
Synchronized gearbox and cone ring therefore
Boîte de vitesses synchronisées et bague conique correspondant

(43) Veröffentlichungstag der Anmeldung: 24.04.2002
(73) Patentinhaber: Ford Global Technologies, Inc., Dearborn, Michigan 48136 (US)
(72) Erfinder: Mohr, Christian, 54290 Trier (DE); Odermatt, Manfred, 53773 Hennef (DE); Hahn, Joachim, 50126 Bergheim (DE)
(74) Vertreter: Bonsmann, Manfred, Dipl.-Ing.

(56) Entgegenhaltungen:
- EP-A- 0 717 212
- DE-U- 1 770 875
- US-A- 3 934 689
- US-A- 3 970 294

## Beschreibung

Die Erfindung betrifft einen Konusring für die Synchronisiereinrichtung eines Schaltgetriebes, wobei der Konusring eine Außenreibfläche für einen Reibkontakt zu einem Außensynchronring des Schaltgetriebes sowie eine Innenreibfläche für einen Reibkontakt zu einem Innensynchronring des Schaltgetriebes aufweist. Die Erfindung betrifft ferner ein Schaltgetriebe mit einer Synchronisiereinrichtung mit doppelter Synchronisierung.

Ein Konusring sowie ein Schaltgetriebe der eingangs genannten Art sind zum Beispiel aus der DE 195 42 735 A1 sowie der EP 0 717 212 A1 bekannt. Schaltgetriebe werden insbesondere in Kraftfahrzeugen eingesetzt, um verschiedene Übersetzungsverhältnisse zwischen einer vom Motor angetriebenen Antriebswelle und einer zu den Rädern verlaufenden Abtriebswelle einstellen zu können. Typischerweise weist ein Schaltgetriebe mindestens zwei parallel verlaufende Getriebewellen auf, auf welchen Zahnräder verschiedenen Durchmessers angeordnet sind, die paarweise miteinander in Eingriff stehen. Von zwei auf unterschiedlichen Getriebewellen angeordneten, in Eingriff stehenden Zahnrädern ist dabei mindestens eines der Zahnräder relativ zu seiner Getriebewelle drehbar angeordnet, so dass es sich unabhängig von der Drehung der eigenen Getriebewelle mit dem anderen Zahnrad mitdrehen kann. Durch Einlegen des entsprechenden Ganges kann jedoch ein Zahnradpaar zur Drehmomentübertragung zwischen den Getriebewellen ausgewählt werden, wobei beim Einlegen des Ganges das drehbar auf seiner Getriebewelle angeordnete Zahnrad drehfest mit dieser Getriebewelle gekoppelt wird. Auf diese Weise kann sichergestellt werden, dass zu einem gegebenen Zeitpunkt die Drehmomentübertragung von der angetriebenen Getriebewelle zur Abtriebswelle nur über ein ausgewähltes der mehreren ineinandergreifenden Zahnradpaare erfolgt.

Bei der Kopplung des ursprünglich frei drehbaren Zahnrades mit der Getriebewelle sind Verzahnungen ineinander zu führen. Damit dies möglichst schonend und geräuschlos vollzogen werden kann, sind sogenannte Synchronisiereinrichtungen vorgesehen, welche anfängliche Drehzahlunterschiede zwischen den zum Eingriff zu bringenden Verzahnungen ausgleichen.

Das zum Beispiel aus der oben genannten EP 0 717 212 A1 bekannte Schaltgetriebe mit einer Synchronisiereinrichtung enthält dabei:
eine Getriebewelle,
einen auf der Getriebewelle drehfest angeordneten Synchronkörper,
eine auf dem Synchronkörper drehfest und axial verschiebebeweglich angeordnete Schiebemuffe mit einer Innenverzahnung,
mindestens ein auf der Getriebewelle drehbar angeordnetes Gangrad mit einer Schaltverzahnung, mit welcher die Innenverzahnung der Schiebemuffe bei der axialen Verschiebung der Schiebemuffe in Eingriff gebracht werden kann,
eine Synchronisiereinrichtung zur Anpassung unterschiedlicher Drehzahlen zwischen Schiebemuffe (beziehungsweise Synchronkörper oder Welle) einerseits und Gangrad andererseits.

Die Synchronisiereinrichtung enthält dabei einen Außensynchronring und einen Innensynchronring, die mit dem Synchronkörper gekoppelt sind und konzentrisch verlaufende kegelstumpfförmige Reibflächen aufweisen. Ferner enthält die Synchronisiereinrichtung einen Konusring, welcher mit dem Gangrad gekoppelt ist und eine kegelstumpfförmige Außenreibfläche sowie eine kegelstumpfförmige Innenreibfläche aufweist, welche jeweils mit den entsprechenden Reibflächen am Außensynchronring beziehungsweise am Innensynchronring zusammenwirken. Wenn in dem genannten Schaltgetriebe ein bestimmter Gang eingelegt werden soll, muss das zugehörige Gangrad drehfest mit der Getriebewelle gekoppelt werden, auf der es angeordnet ist. Eine solche drehfeste Kopplung wird durch eine derartige axiale Verschiebung der Schiebemuffe erzielt, dass deren Innenverzahnung in die Schaltverzahnung des Gangrades eingreift. Da die Schiebemuffe über den chronkörper drehfest mit der Getriebewelle gekoppelt ist entsteht auf diese Weise eine drehfeste Kopplung zwischen Gangrad und Getriebewelle.

Vor Einlegen des Ganges sind die Schiebemuffe einerseits und das Gangrad andererseits ungekoppelt und besitzen daher in der Regel unterschiedliche relative Drehzahlen. Um den glatten und geräuschlosen Eingriff der Innenverzahnung der Schiebemuffe in die Schaltverzahnung des Gangrades zu gewährieisten, werden daher zunächst die Drehzahlen von Gangrad und Schiebemuffe mittels der Synchronisiereinrichtung angeglichen. Dies geschieht dadurch, dass die Schiebemuffe bei Beginn der axialen Bewegung in Richtung des Gangrades einen Druck auf den Außensynchronring sowie den damit gekoppelten Innensynchronring ausübt. Dieser Druck bringt die entsprechenden Reibflächen der genannten Synchronringe mit den ihnen zugewandten Reibflächen des Konusringes in Reibkontakt. Da der Außensynchronring und der Innensynchronring mit der Getriebewelle, der Konusring jedoch mit dem Gangrad gekoppelt ist, gleiten die Reibflächen zunächst aufgrund der unterschiedlichen Drehzahlen von Gangrad einerseits und Getriebewelle andererseits übereinander. Durch die Reibung zwischen den Flächen wird der Drehzahlunterschied jedoch zunehmend ausgeglichen, so dass Gangrad und Getriebewelle schließlich synchronisiert laufen. In diesem Zustand kann die Schiebemuffe problemlos mit ihrer Innenverzahnung in die Schaltverzahnung des Gangrades geschoben werden. Eine derartige Synchronisiereinrichtung wird aufgrund der zweifachen Reibflächen am Konusring auch als "doppelte Synchronisierung" bezeichnet.

Die in Reibkontakt stehenden Flächen an Außensynchronring, Innensynchronring und Konusring unterliegen naturgemäß einer hohen Belastung. Dies gilt vor allem für häufig durchgeschaltete Gänge wie z.B. den dritten Gang. Das Funktionieren der Synchronisiereinrichtung erfordert eine hohe Genauigkeit bei der Herstellung insbesondere der reibschlüssig zusammenwirkenden Bauteile. Mit einer Vereinfachung der Herstellung dieser Bauteile beschäftigt sich die EP 0 717 212 A1. Weiterhin wird eine Reduzierung des Reibverschleißes der reibschlüssig zusammenwirkenden Bauteile durch eine möglichst gute Ölung der Reibflächen zu erreichen versucht. Mit einer Verbesserung der Ölzufuhr beschäftigt sich die DE 195 42 735 A1. Die über eine verbesserte Schmierung der Reibflächen versuchte Verminderung des Reibverschleißes erfordert jedoch den Einsatz verhältnismäßig teuren Vollsyntheseöls.

Des Weiteren ist aus der US 3 934 689 ist eine Synchronisiereinrichtung für ein Schaltgetriebe bekannt, welche einen Synchronring mit einer konusförmigen Außen- und einer zylindrischen Innenreibfläche aufweist. Bei einem Schaltvorgang wird eine Schiebemuffe axial verschoben und kommt dabei mit ihrer Innenverzahnung mit der Außenreibfläche des Synchronringes in Reibkontakt. Der synchronring wird hierdurch mitgeschleppt, was wiederum einen im Inneren des Synchronringes angeordneten, unterbrochenen Blockierring, welcher mit dem anzutreibenden Gangrad gekoppelt ist, unter Spannung setzt. Durch die Spannung weitet sich der Blockierring auf, so dass seine Außenfläche an der Innenfläche des Synchronringes punktförmig zur Anlage kommt. Durch die Reibungsvorgänge an den Flächen des Synchronringes wird das Gangrad schließlich auf die Drehgeschwindigkeit der Schaltmuffe beschleunigt, so dass der Schaltvorgang mit einem synchronisierten Ineinanderschieben von Schaltmuffe und Gangrad abgeschlossen werden kann. Dabei wird die Innenverzahnung der Schaltmuffe über den Synchronring hinweggeschoben, was nur deshalb möglich ist, weil der Synchronring in Umfangsrichtung eine Unterbrechung aufweist und daher radial komprimiert werden kann.

Aus der US 3 970 294 ist ein unterbrochener Synchronring mit nur einer äußeren Reibfläche bekannt.

Vor diesem Hintergrund war es Aufgabe der vorliegenden Erfindung, ein Schaltgetriebe beziehungsweise dessen Synchronisiereinrichtung so zu verbessern, dass eine erhöhte Funktionssicherheit und erhöhte Lebensdauer erreicht wird.

Diese Aufgabe wird durch einen Konusring mit den in Anspruch 1 angegebenen Merkmalen sowie ein Schaltgetriebe mit den in Anspruch 8 angegebenen Merkmalen gelöst. Vorteilhafte Ausgestaltungen sind jeweils in den Unteransprüchen angegeben.

Der erfindungsgemäße Konusring für die Synchronisiereinrichtung eines Schaltgetriebes weist in der eingangs erläuterten Weise eine Außenreibfläche für einen Reibkontakt zu einem Außensynchronring des Schaltgetriebes sowie eine Innenreibfläche für einen Reibkontakt zu einem Innensynchronring des Schaltgetriebes auf. Der Konusring ist so ausgestaltet, dass Unterschiede zwischen dem Reibverschleiß beziehungsweise der Reibbeanspruchung an der Außenreibfläche des Konusringes und dem Reibverschleiß beziehungsweise der Reibbeanspruchung an der Innenreibfläche des Konusringes vermindert werden. vorzugsweise wird er so ausgestaltet, dass derartige Unterschiede im Wesentlichen vollständig beseitigt werden. Die Erfindung beruht demnach auf der Erkenntnis, dass die Außenreibfläche und die Innenreibfläche von Konusringen bekannter Synchronisiereinrichtungen einer unterschiedlich starken Beanspruchung durch Reibverschleiß unterliegen. Dadurch, dass der Konusring so ausgestaltet wird, dass diese Unterschiede vermindert werden beziehungsweise ganz ausgeschaltet werden, kann die Belastung der Reibflächen gleichmäßig über die gesamte Fläche verteilt werden, was insgesamt zu einer Erhöhung der Lebensdauer der Synchronisiereinrichtung beziehungsweise des Schaltgetriebes führt.

Für eine Ausgestaltung der Synchronisiereinrichtung, bei der die Unterschiede zwischen dem Reibverschleiß an der Außenreibfläche und der Innenreibfläche des Konusringes vermindert werden, stehen verschiedene Möglichkeiten zur Verfügung. Nach einer ersten bevorzugten Ausgestaltung weist der - ursprünglich endlos umlaufende, kreisförmige - Umfang des Konusringes eine elastische Dehnungsstelle auf, die insbesondere in Form einer Unterbrechungsstelle vorliegen kann, so dass eine radiale Aufweitung beziehungsweise umgekehrt auch eine radiale Stauchung des Konusringes möglich ist. Beim Betrieb der Synchronisiereinrichtung kann der Konusring somit den auf ihn wirkenden radialen Kräften nachgeben. Wenn der Konusring zum Beispiel zunächst mit seiner Innenreibfläche am Innensynchronring zur Anlage kommt, kann er der auf ihn wirkenden, radial nach außen gerichteten Kraft nachgeben und sich aufweiten, bis er an seiner Außenreibfläche mit der Reibfläche des Außensynchronringes in Kontakt kommt. Wenn der Konusring dagegen zunächst mit seiner Außenreibfläche am Außensynchronring zur Anlage kommt, kann er der radial nach innen gerichteten Kraft nachgeben und gestaucht werden, bis er an seiner Innenreibfläche mit der Reibfläche des Innensynchronringes in Kontakt kommt. Auf diese Weise wird der Konusring an der Innenreibfläche und der Außenreibfläche in etwa gleichmäßig mit radialen Kräften beaufschlagt, so dass die Reibungsbelastung an diesen Flächen in etwa gleich groß wird. Mit anderen Worten stützt sich der Innensynchronring kräftemäßig nicht mehr am Konusring ab, sondern am Außensynchronring, wobei der Konusring lediglich zwischen den beiden Synchronringen liegt, ohne jedoch selbst wesentliche radiale Kräfte aufzunehmen. Durch die erfindungsgemäße Dehnungsstelle des Konusringes wird somit erreicht, dass dieser einseitigen Belastungen nachgeben kann, so dass sich die unvermeidlichen Belastungen gleichmäßig über die vorhandenen Reibflächen verteilen.

Die an der genannten Unterbrechungsstelle aufeinanderstoßenden Enden des Konusringes sind vorzugsweise miteinander so verzahnt, dass sie in axialer Richtung nicht gegeneinander verschoben werden können. Eine Verschiebung wird demnach nur in Umfangsrichtung erlaubt, so dass sich der Konusring in seinem Radius aufweiten oder zusammenstauchen lassen kann. Eine gegenseitige axiale Verschiebung der Enden des Konusringes ist dagegen unerwünscht, da sie den Konusring aus seiner ebenen Konfiguration herausbringen würde, was für das Zusammenwirken der Bauteile des Schaltgetriebes nachteilig wäre.

Nach einer anderen Weiterentwicklung der Erfindung sind die an der Unterbrechungsstelle aufeinanderstoßenden Enden des Konusringes so verzahnt, dass sie in Umfangsrichtung nur um ein begrenztes Maß gegeneinander verschiebbar sind. Das heißt, dass die Aufweitung beziehungsweise Stauchung des Konusringes nur zwischen einer unteren und einer oberen Grenze möglich ist. Diese Grenzen können so gewählt werden, dass sie die im normalen Betrieb der Synchronisiereinrichtung auftretenden Spielräume abdecken. Über den normalen Bewegungsspielraum hinausgehende Aufweitungen beziehungsweise Stauchungen macht der Konusring dagegen nicht mit.

Der mit einer Dehnungsstelle und insbesondere mit einer Verzahnung der Enden ausgestattete Konusring ist vorzugsweise im Bereich der Dehnungsstelle bzw. Verzahnung in radialer Richtung gesehen dünner ausgebildet als im übrigen Bereich des Konusringes. Hierdurch wird sichergestellt, dass sich auch bei der betriebsbedingten Verschiebung der Verzahnung keine Teile des Konusringes jenseits des maximalen beziehungsweise minimalen Radius erstrecken und hierdurch störend mit anderen Bauteilen der Synchronisiereinrichtung, insbesondere mit den Reibflächen am Außensynchronring beziehungsweise Innensynchronring zusammenwirken könnten.

Die Ausgestaltung der verzahnten Enden des Konusringes an der Unterbrechungsstelle kann insbesondere so aussehen, dass ein erstes Ende mindestens einen in Umlaufrichtung weisenden Vorsprung aufweist, welcher in eine korrespondierende, am anderen Ende des Konusringes ausgebildete und in Umlaufrichtung verlaufende Nut eingreift. Durch den Eingriff des Vorsprunges in die Nut wird eine axiale Relativverschiebung der beiden Enden verhindert, während eine Aufweitung oder Stauchung des Konusringes möglich ist.

In einer Weiterbildung der zuletzt genannten Ausgestaltung kann dabei die Nut hinterschnitten ausgebildet sein, während der Vorsprung am äußeren Ende eine Verbreiterung aufweist, die breiter ist als die Eingangsöffnung der Nut. Auf diese weise entsteht eine Verzahnung ähnlich eines sogenannten Schwalbenschwanzes, bei welcher die Aufweitung des Konusringes durch ein Maximum begrenzt ist. Das Maximum der Aufweitung ergibt sich dadurch, dass die Verbreiterung des Vorsprunges an die Hinterschneidungen der Nut anstößt und somit eine darüber hinausgehende Aufweitung des Konusringes verhindert.

Gemäß einer anderen Ausgestaltung der Erfindung, die selbständig oder in Verbindung mit der oben genannten Unterbrechung des Konusringes verwirklicht werden kann, sind die Außenreibfläche des Konusringes und die Innenreibfläche des Konusringes jeweils kegelstumpfförmig, wobei beide Flächen unterschiedliche Kegelwinkel aufweisen. Durch diese unterschiedlichen Kegelwinkel entsteht ein keilförmiger Querschnitt des Konusringes mit unterschiedlichen Neigungen der Außenreibfläche beziehungsweise der Innenreibfläche, was zu einer Veränderung der Reibungsbelastung an diesen Flächen führt. Über die Neigungen der Außenreibfläche beziehungsweise der Innenreibfläche kann somit der Reibverschleiß an der jeweiligen Fläche beeinflusst werden. Erfindungsgemäß werden die Neigungen dabei so eingestellt, dass an der Außenreibfläche und der Innenreibfläche ein etwa gleich großer Reibverschleiß resultiert.

Dabei wird der Kegelwinkel der Außenreibfläche vorzugsweise kleiner als der Kegelwinkel der Innenreibfläche gewählt. Die Außenreibfläche verläuft somit flacher in Bezug auf die Achse des Konusringes (d.h. die Drehachse der gesamten Anordnung), während die Innenreibfläche steiler beziehungsweise schräger zu dieser Achse liegt.

Vorzugsweise beträgt der Kegelwinkel der Außenreibfläche 3° bis 10°, besonders bevorzugt 5° bis 7° relativ zur Achse des Konusringes. Der Kegelwinkel der Innenreibfläche beträgt vorzugsweise 8° bis 20°, besonders bevorzugt 11° bis 16° relativ zur Achse des Konusringes.

Die Erfindung betrifft weiterhin ein Schaltgetriebe mit einer Synchronisiereinrichtung, enthaltend
eine Getriebewelle,
einen auf der Getriebewelle drehfest angeordneten Synchronkörper,
eine auf dem Synchronkörper drehfest und axial verschiebebeweglich angeordnete Schiebemuffe mit einer Innenverzahnung,
mindestens ein auf der Getriebewelle drehbar angeordnetes Gangrad mit einer Schaltverzahnung, mit welcher die Innenverzahnung der Schiebemuffe bei der axialen Verschiebung der Schiebemuffe in Eingriff gebracht werden kann, und
eine Synchronisiereinrichtung zur Anpassung unterschiedlicher Drehgeschwindigkeiten zwischen Schiebemuffe einerseits und Gangrad einerseits, mit einem Außensynchronring und einem Innensynchronring, die mit dem Synchronkörper gekoppelt sind, sowie mit einem Konusring, welcher mit dem Gangrad gekoppelt ist und eine Außenreibfläche sowie eine Innenreibfläche aufweist, welche mit entsprechenden Reibflächen am Außensynchronring beziehungsweise am Innensynchronring zusammenwirken.

Das Schaltgetriebe ist erfindungsgemäß dadurch gekennzeichnet, dass der Konusring in der oben erläuterten Weise ausgestaltet ist, wobei der Außensynchronring und der Innensynchronring in der notwendigen weise passend zum Konusring ausgestaltet sind. Der Konusring des Schaltgetriebes kann demnach eine Dehnungsstelle wie zum Beispiel eine Unterbrechung des Umlaufes aufweisen, so dass er radial geweitet beziehungsweise gestaucht werden kann. In diesem Falle sind keine Anpassungen des Außensynchronringes oder Innensynchronringes notwendig. Zusätzlich oder alternativ kann der Konusring auch mit zwei kegelstumpfförmigen Reibflächen versehen sein, welche jeweils unterschiedliche Kegelwinkel aufweisen. In diesem Falle sind die Neigungen der Reibflächen am Außensynchronring und Innensynchronring entsprechend ihren Gegenstücken am Konusring ausgebildet.

Die Auslegung des Schaltgetriebes erfolgt vorzugsweise so, dass bei Ausführung eines Schaltvorganges der Konusring am Außensynchronring zuerst anliegt. Hierdurch kann die Reibungsbelastung der Innenreibfläche des Konusringes vermindert werden, was dem angestrebten Ausgleich der Reibungsbelastungen der Innenreibfläche und der Außenreibfläche zugute kommt, da die Innenreibfläche üblicherweise eine höhere Reibungsbelastung tragen muss.

Im Folgenden wird die Erfindung mit Hilfe der Figuren beispielhaft erläutert. Es zeigen:
- Fig. 1: einen schematischen Querschnitt durch die für die vorliegende Erfindung relevanten Bauteile der Synchronisiereinrichtung eines Schaltgetriebes;
- Fig. 2: perspektivisch einen Konusring gemäß einer ersten Ausgestaltung der Erfindung;
- Fig. 3: eine Aufsicht auf die Unterbrechungsstelle des Konusringes gemäß einer zweiten Ausgestaltung der Erfindung;
- Fig. 4: einen Querschnitt entlang der Linie IV-IV von Figur 3;
- Fig. 5: eine Aufsicht auf die Unterbrechungsstelle des Konusringes gemäß einer dritten Ausgestaltung der Erfindung;
- Fig. 6: eine Aufsicht auf die Unterbrechungsstelle des Konusringes gemäß einer vierten Ausgestaltung der Erfindung mit und ohne Vermaßung;
- Fig. 7: eine Aufsicht auf die Unterbrechungsstelle des Konusringes gemäß einer fünften Ausgestaltung der Erfindung im Normalzustand und unter Dehnung;
- Fig. 8: weitere mögliche Ausgestaltungen der Unterbrechungsstelle des Konusringes;
- Fig. 9: verschiedene Ausgestaltungen und Anordnungen von Dehnungsstellen des Konusringes;
- Fig. 10: eine vergrößerte Teilansicht des Querschnittes von Figur 1 gemäß einer vierten Ausgestaltung der Erfindung.

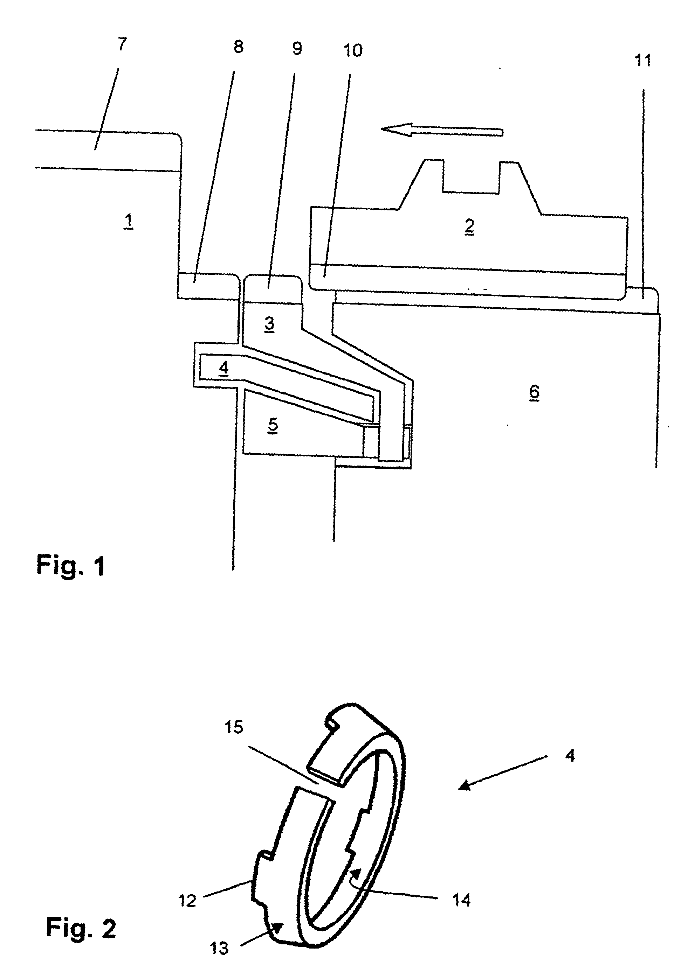

In Figur 1 sind in einem Querschnitt die für die vorliegende Erfindung wesentlichen Elemente eines Schaltgetriebes mit einer Synchronisiereinrichtung dargestellt. Der interessierende Teil des Schaltgetriebes besteht aus einem Synchronkörper 6 und einem Gangrad 1, welche beide auf derselben Getriebewelle (nicht dargestellt) angeordnet sind. Der Synchronkörper 6 ist dabei zum Beispiel über eine entsprechende Verzahnung drehfest auf der Getriebewelle angeordnet, so dass er deren Drehung folgt. Demgegenüber ist das Gangrad 1 relativ zur Getriebewelle drehbar angeordnet, so dass es eine andere Drehung als die Getriebewelle ausführen kann, wenn es über seine Außenverzahnung 7 zum Beispiel mit anderen Zahnrädern des Schaltgetriebes in Eingriff steht.

Wenn das mit anderen Zahnrädern des Schaltgetriebes in Eingriff stehende Gangrad 1 eine Drehmomentübertragung von der oder auf die Getriebewelle, auf der es angeordnet ist, vornehmen soll, muss es drehfest mit dieser Getriebewelle gekoppelt werden. Dieser drehfesten Kopplung des Gangrades 1 mit der Getriebewelle beziehungsweise dem Synchronkörper 6 dient die Schiebemuffe 2, welche vermöge einer Innenverzahnung 10 an der Schiebemuffe 2 und einer korrespondierenden Außenverzahnung 11 am Synchronkörper 6 axial verschiebebeweglich und drehfest auf dem Synchronkörper 6 angeordnet ist. Wenn die Schiebemuffe 2 über einen Hebel (nicht dargestellt) axial in Richtung des Pfeiles auf das Gangrad 1 zu geschoben wird, kommt seine Innenverzahnung 10 mit der am Gangrad 1 angeordneten Schaltverzahnung 8 in Eingriff. Die Schiebemuffe 2 koppelt dadurch in der angestrebten Weise den Synchronkörper 6 mit dem Gangrad 1.

Ein glattes, beschädigungsfreies und geräuscharmes Eingreifen der Innenverzahnung 10 der Schiebemuffe 2 in die Schaltverzahnung 8 des Gangrades 1 setzt voraus, dass keine relative Drehung zwischen den Verzahnungen stattfindet. Vor der Kopplung der Verzahnungen wird sich das Gangrad 1 jedoch mit einer anderen Drehzahl drehen als die Schiebemuffe 2. Aus diesem Grunde ist eine Synchronisiereinrichtung vorgesehen, welche vor dem Ineinandergreifen der Innenverzahnung 10 mit der Schaltverzahnung 8 sicherstellt, dass sich die Drehzahlen dieser Verzahnungen aneinander angeglichen haben.

Die Synchronisiereinrichtung besteht dabei zum einen aus einem Außensynchronring 3 und einem Innensynchronring 5, welche miteinander gekoppelt sind. Der Außensynchronring 3 greift in entsprechende Vertiefungen am Synchronkörper 6 ein, so dass er grundsätzlich drehfest hiermit verbunden ist, wobei jedoch eine begrenzte relative Drehverschiebung zwischen dem Synchronkörper 6 und dem Außensynchronring 3 (und damit dem Innensynchronring 5) möglich ist. Bis auf die genannte begrenzte Drehverschiebung rotieren demnach Außensynchronring 3 und Innensynchronring 5 mit derselben Drehzahl wie der Synchronkörper 6 beziehungsweise die Schiebemuffe 2.

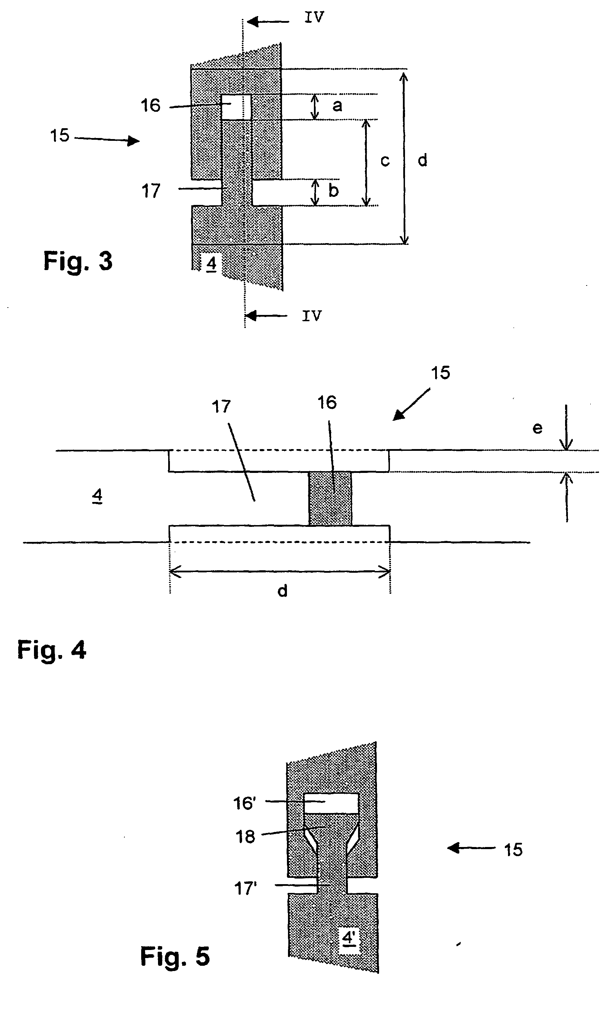

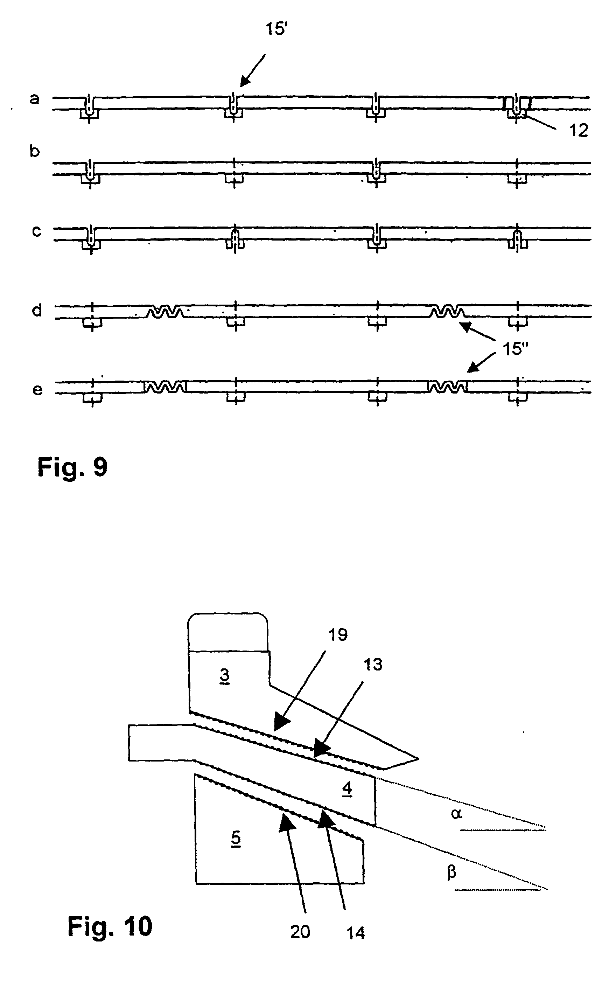

Des weiteren enthält die Synchronisiereinrichtung einen Konusring 4. Dieser ist zwischen dem Außensynchronring 3 und dem Innensynchronring 5 angeordnet, wobei er diesen beiden Ringen eine Außenreibfläche 13 beziehungsweise eine Innenreibfläche 14 zuwendet. Über diese Reibflächen kann er mit entsprechenden Reibflächen 19 beziehungsweise 20 am Außensynchronring 3 beziehungsweise Innensynchronring 5 in ReibKontakt treten (vgl. Figur 10). Der Konusring besitzt weiterhin Fortsätze 12 (Figur 2) in axialer Richtung, welche in entsprechende Aussparungen am Gangrad 1 eingreifen. Der Konusring ist somit im Wesentlichen drehfest mit dem Gangrad 1 gekoppelt, so dass er dessen Drehbewegung folgt.

Bei einem Einlegen des Ganges wird die Schiebemuffe 2 in Richtung des Pfeiles auf das Gangrad 1 zu bewegt. Hierbei übt sie auf bekannte und daher hier nicht näher erläuterte Weise einen Druck auf den Außensynchronring 3 beziehungsweise den Innensynchronring 5 aus, was dazu führt, dass die beiden Synchronringe in Reibkontakt zu den Reibflächen des Konusringes 4 treten. Aufgrund der unterschiedlichen Drehzahlen zwischen dem Außensynchronring 3 und dem Innensynchronring 5 einerseits sowie dem Konusring 4 andererseits kommt es dabei zunächst zu einem gleitenden Kontakt an den Reibflächen. Aufgrund der Reibung gleichen sich jedoch die Drehzahlunterschiede zunehmend aus, so dass die Reibflächen schließlich relativ zueinander ruhen. In diesem Zustand ist das Gangrad 1 zur Schiebemuffe 2 (und dementsprechend zum Synchronkörper 6 beziehungsweise zur Getriebewelle) synchronisiert, so dass die Innenverzahnung 10 der Schiebemuffe problemlos auf die Schaltverzahnung 8 des Gangrades geschoben werden kann, um hierdurch die formschlüssige Kopplung herzustellen. Vor Erreichen der Synchronisation bewirkt eine Relativdrehung zwischen dem Außensynchronring 3 und der Schiebemuffe 2, dass sich die Sperrverzahnung 9 am Außensynchronring 3 der Innenverzahnung 10 an der Schiebemuffe 2 in den Weg stellt und somit ein unerwünschtes Durchschieben der Schiebemuffe 2 auf die noch unsynchronisierte Schaltverzahnung 8 des Gangrades 1 verhindert.

Naturgemäß unterliegen die Reibflächen am Konusring 4 beziehungsweise am Außensynchronring 3 und Innensynchronring 5 einer hohen Belastung und damit einem hohen Verschleiß. Dabei wurde beobachtet, dass bei den herkömmlichen Ausgestaltungen der Synchronisiereinrichtung der Verschleiß an der Innenreibfläche 14 des Konusringes 4 anders ist als an der Außenreibfläche 13, wobei er in der Regel an der Innenreibfläche größer ist als außen. Durch die nachfolgend beschriebenen Ausgestaltungen der Synchronisiereinrichtung wird daher angestrebt, die Reibungsbelastung an beiden Flächen etwa gleich groß zu halten, so dass sie sich bestmöglich über die vorhandenen Reibflächen verteilt und somit eine längere Lebensdauer der Synchronisiereinrichtung erzielt wird.

Dabei wird gemäß einer ersten Ausgestaltung der Erfindung, die in Figur 2 dargestellt ist, der Konusring 4 mit einer Unterbrechung 15 in Umfangsrichtung versehen. Durch diese Unterbrechung ist der Konusring umfänglich nicht mehr geschlossen. Daher ist eine radiale Aufweitung beziehungsweise Stauchung des Ringes möglich. Der Konusring 4 kann somit einer einseitig auf ihn wirkenden radialen Belastung an entweder der Außenreibfläche 13 oder der Innenreibfläche 14 so lange nachgeben, bis er an der gegenüberliegenden Reibfläche mit einer entgegengesetzt gerichteten radialen Kraft beaufschlagt wird. Auf diese Weise wird sichergestellt, dass die Reibungsbelastungen an den beiden Reibflächen 13 und 14 des Konusringes 4 sich gleichmäßig verteilen. Gleichzeitig wird hierdurch natürlich auch die Reibungsbelastung an den entsprechenden Reibflächen des Außensynchronringes 3 und des Innensynchronringes 5 gleichmäßiger. Ferner kann der Konusring 4 auch Ausdehnungen durch Erwärmung während des Betriebs spannungsfrei nachgeben.

Ein weiterer Vorteil der erfindungsgemäßen Unterbrechung des Konusringes 4 besteht darin, dass sich die Teile nach dem Synchronisieren leichter voneinander lösen. Die Federwirkung sorgt ferner für ein leichteres "Anfahren" der Synchronisation zu Beginn des Synchronisationsvorgangs.

Die beiden an der Unterbrechung 15 zusammenstoßenden Enden des Konusringes sind vorzugsweise verzahnt ausgebildet, wofür in den Figuren 3 bis 7 Beispiele dargestellt sind. Bei einer ersten Verzahnungsart gemäß Figur 3 weist dabei ein erstes Ende des Konusringes 4 einen in Umfangsrichtung verlaufenden Vorsprung 17 auf, welcher in eine korrespondierende Nut 16 am gegenüberliegenden Ende des Konusringes eingreift. Dadurch, dass der Vorsprung 17 in der Nut 16 seitlich anliegt, ist eine axiale Relativverschiebung der beiden Enden des Konusringes ausgeschlossen. Lediglich in Umfangsrichtung kann sich der Vorsprung 17 bewegen, indem er unterschiedlich tief in die Nut 16 eintaucht. Im Normalzustand des Konusringes 4 beträgt der Abstand a zwischen der Spitze des Vorsprunges 17 und dem Boden der Nut typischerweise ca. 2 mm. Ebenso beträgt der Abstand b zwischen den Rändern der Nut und dem Fußpunkt des Vorsprunges 17 typischerweise ca. 2 mm. Die Länge c des Vorsprunges 17 beträgt typischerweise ca. 6 mm. Die Breite des mittig angeordneten Vorsprunges 17 beträgt typischerweise ca. 2 mm bei einer Gesamtbreite des Konusringes 4 von 6 mm. Die genannten Abmessungen sind natürlich nur beispielhaft zu verstehen und können vom Fachmann in erforderlicher Weise einem gegebenen Schaltgetriebe angepasst werden.

In Figur 4 ist ein Querschnitt entlang der Linie IV-IV der in Figur 3 gezeigten Verzahnung dargestellt. Hieraus ist ersichtlich, dass der Konusring 4 im Verzahnungsbereich auf einer Länge d von typischerweise 12 mm einen Materialabtrag der Dicke e von typischerweise 0,5 mm aufweist. Durch diesen verdünnt ausgebildeten Verzahnungsbereich wird sichergestellt, dass auch bei einer Dehnung oder Stauchung des Konusringes 4 keine Teile über den maximalen beziehungsweise minimalen Radius des Konusringes (gestrichelte Linien in Figur 4) hinaus hervorstehen und somit stören können.

In Figur 5 ist eine alternative Ausgestaltung der Verzahnung der Enden eines Konusringes 4' dargestellt. Im Unterschied zur Verzahnung der Figuren 3 und 4 ist hierbei die Nut 16' hinterschnitten ausgebildet, und der Vorsprung 17' weist an seinem Kopf beidseitig eine Verbreiterung 18 auf. Hierdurch entsteht eine Verzahnung ähnlich einem Schwalbenschwanz zwischen den Enden des Konusringes 4', wobei in Umfangsrichtung nur eine begrenzte Relativbewegung möglich ist. Die Aufweitung des Konusringes 4' findet ihr Ende, wenn die Verbreiterung 18 des Vorsprunges 17' an die Hinterschneidungen der Nut 16' anstößt. Auf diese Weise kann die zum Beispiel aufgrund der Fliehkraft erfolgende selbständige Aufweitung des Konusringes 4' begrenzt werden.

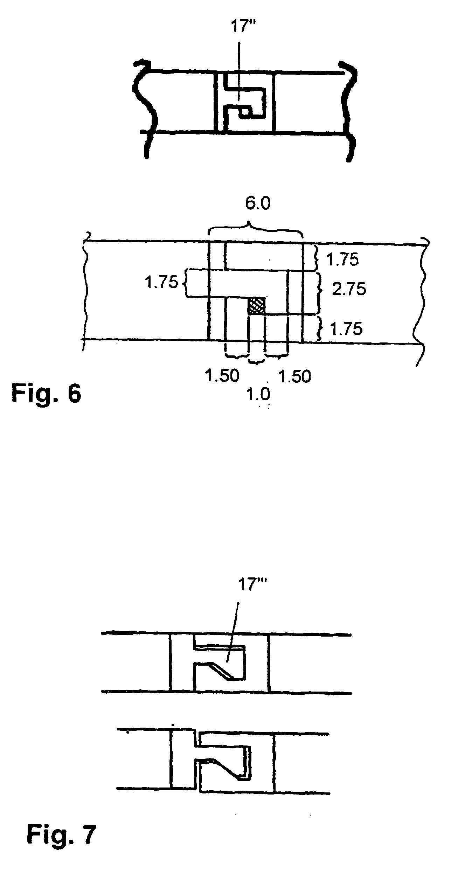

Figur 6 zeigt eine in Achsrichtung asymmetrische Verzahnung mit einem L-förmigen Vorsprung 17'', der in eine rechteckige Aussparung am anderen Ende des Konusringes eingreift. Im unteren Teil der Figur sind beispielhafte Maße in der Einheit mm für diese Ausgestaltung angegeben. Der ca. 6,0 mm breite Bereich der Verzahnung ist vorzugsweise auf beiden Seiten etwa 0,2 mm verdünnt ausgebildet.

In Figur 7 ist eine Verzahnung mit einem in Achsrichtung asymmetrischen, einseitig auskragenden Fortsatz 17''' dargestellt, wobei die auskragende Hälfte des Fortsatzes ähnlich wie in Figur 5 geformt ist. Der untere Teil der Figur zeigt diese Anordnung unter Dehnungsbelastung, wobei aufgrund der Asymmetrie und der schrägen Gleitflächen an den jeweiligen Enden des Konusringes eine axiale Verschiebung auftritt.

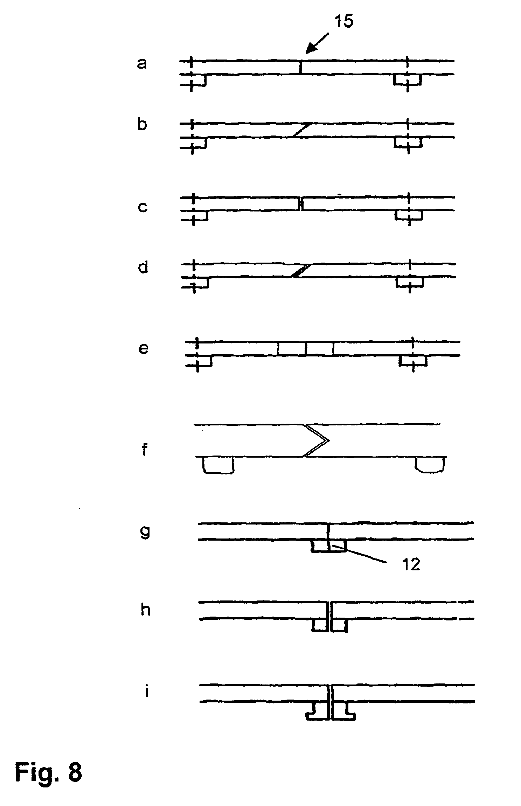

In Figur 8 sind verschiedene Varianten einer unverzahnten Unterbrechung 15 des Konusringes dargestellt:
a) eine zum Konusring rechtwinklige Trennung mit aneinanderstoßenden Enden;
b) eine zum Konusring schräge Trennung mit aneinanderstoßenden Enden;
c) eine zum Konusring rechtwinklige Trennung mit einer Lücke zwischen den Enden;
d) eine zum Konusring schräge Trennung mit einer Lücke zwischen den Enden;
e) eine Trennung entsprechend a) mit einem verdünnt ausgebildeten Verzahnungsbereich; eine entsprechende Verdünnung kann auch bei allen anderen Ausführungsformen vorgesehen werden;
f) eine pfeilförmige Trennung;
g) eine Trennung entsprechend a), jedoch im Bereich eines Fortsatzes 12 des Konusringes (vgl. Figur 2) und durch den Fortsatz durchgehend;
h) eine Trennung entsprechend g) mit einer Lücke zwischen den Enden des Konusringes;
i) eine Trennung entsprechend h) mit einem hakenförmig ausgebildeten Fortsatz des Konusringes.

In Figur 9 sind verschiedene Varianten von Konusringen dargestellt, bei denen anstelle einer Unterbrechung nur eine Dehnungsstelle im Konusring ausgebildet ist. Da die Dehnungsstelle den Ring als solchen zusammenhält, können mehrere Dehnungsstellen an dem Ring ausgebildet sein.

Figur 9a zeigt im Bereich eines jeden Fortsatzes 12 von einer axialen Richtung aus in den Konusring eingelassene Ausnehmungen 15'.

Bei Figur 9b sind die Ausnehmungen 15' nur in jedem zweiten Fortsatz 12 vorgesehen, und bei Figur 9c sind sie bei jedem Fortsatz 12 abwechselnd von der Vorderseite bzw. der Rückseite des Konusringes ausgehend angeordnet.

Die Figuren 9d und 9e zeigen Dehnungsstellen 15'', die durch einen abschnittsweisen Zick-Zack-Verlauf des Konusringes realisiert sind. Bei der Variante von Figur 9e ist dabei der Dehnungsbereich zusätzlich radial verdünnt ausgebildet. Eine solche Verdünnung kann natürlich auch bei allen anderen in Figur 9 dargestellten Dehnungsstellen des Konus vorhanden sein.

In Figur 10 ist im Querschnitt durch den Kontaktbereich von Außensynchronring 3, Innensynchronring 5 und Konusring 4 eine alternative beziehungsweise zusätzlich anwendbare Ausgestaltung des Konusringes dargestellt. Dabei hat die kegelstumpfförmige Außenreibfläche 13 des Konusringes 4 einen anderen Kegelwinkel α als die kegelstumpfförmige Innenreibfläche 14, welche den Kegelwinkel β hat. Durch die unterschiedlichen Neigungswinkel α, β kann die Reibungsbelastung zwischen der Innenreibfläche 14 und der zugehörigen Reibfläche 20 am Innensynchronring 5 einerseits sowie der Außenreibfläche 13 und der zugehörigen Reibfläche 19 am Außensynchronring 3 andererseits derart beeinflusst werden, dass in beiden Kontaktzonen ein etwa gleich großer Reibungsverschleiß eintritt. Die damit eintretende gleichmäßige Belastung der Reibungsflächen führt zu einer Verlängerung der Lebensdauer der Synchronisiereinrichtung. Der Winkel α beträgt typischerweise 6,5°, während der Winkel β typischerweise 13° beträgt.

Eine weitere Verringerung der in der Regel an der Innenreibfläche 14 vorliegenden höheren Belastung kann dadurch erzielt werden, dass die Synchronisiereinrichtung so ausgelegt wird, dass bei einer Verschiebung der Schiebemuffe 2 zuerst die Außenreibfläche 13 des Konusringes 4 mit der Reibfläche 19 am Außensynchronring 3 in Kontakt kommt.

Der Außensynchronring 3 und der Innensynchronring 5 sind vorzugsweise aus einem Buntmetall hergestellt. Der Konusring 4 besteht dagegen typischerweise aus Stahl. Aufgrund der unterschiedlichen Wärmeausdehnungskoeffizienten ergibt sich ohne die erfindungsgemäßen Maßnahmen eine ungleich höhere Belastung des Innensynchronringes 5 im Vergleich zum Außensynchronring 3. Das Buntmetall dehnt sich bei Erwärmung schneller aus und sorgt daher für zusätzliche Kräfte am Konusring 4.

Ein Vorteil der Erfindung besteht darin, dass bei einer Fehlbedienung des Getriebes durch den Benutzer bzw. einem Missbrauch dieses weitgehend vor Zerstörung geschützt wird.

Unter Missbrauch wird zum einen ein Schaltverhalten verstanden, bei dem der Benutzer während der Fahrt die Schaltung betätigt, ohne die Kupplung zu öffnen. Dies hat zur Folge, dass die entsprechende Synchronisationseinrichtung nicht nur die Getriebeeingangswelle in Gleichlauf zu bringen hat, sondern damit belastet wird, sämtliche rotierenden Teile des Motors abzubremsen bzw. zu beschleunigen. Es ist offensichtlich, dass die Synchronisationseinrichtung für eine derartige Leistung nicht ausgelegt sein kann, so dass sich diese bei bekannten Getrieben sehr schnell bis zur Zerstörung erwärmt. Eine weitere Form des möglichen Missbrauchs besteht in einem Schaltverhalten, bei dem der Benutzer z.B. bei stehendem Fahrzeug an der Ampel die Hand auf den Schalthebel legt und ein wenig Kraft in Schaltrichtung wirken läßt. Dabei kann es zu einer Ansynchronisation der Synchronisationseinrichtungen z.B. des dritten Ganges (bei einem H-Schaltungsschema mit Neutralstellung zwischen Gang 3 und 4) bei nicht betätigtem Kupplungspedal kommen, wodurch sich bei bekannten Getrieben die Synchronisationseinrichtung erheblich erwärmt, was ebenfalls zur Beschädigung oder Zerstörung führen kann.

Insbesondere bei der in Figur 7 dargestellten Ausführungsform drückt der innere Blockerring den Konus bei missbrauchsbedingter Erwärmung auseinander, wodurch sich der Konusring derart verformt, dass innen und außen die Kontaktflächen Blockerring und Konusring nicht in Kontakt bleiben. Dies bewirkt, dass bei Missbrauch die Synchronisationseinrichtung ihre Sperrwirkung verliert und es zu einem Krachen (Kontakt der Schaltverzahnung) kommt. Der Missbrauch führt bei diesem System also zu einer deutlich wahrnehmbaren Fehlfunktion. Das ist positiv, da dabei die Synchronisationseinrichtung nicht zerstört wird.

## Patentansprüche

1. Konusring für die Synchronisiereinrichtung eines Schaltgetriebes, wobei der Konusring eine Außenreibfläche für einen Reibkontakt zu einem Außensynchronring des Schaltgetriebes sowie eine Innenreibfläche für einen Reibkontakt zu einem Innensynchronring des Schaltgetriebes aufweist,
**dadurch gekennzeichnet, dass** der Umfang des Konusringes (4) eine Dehnungsstelle (15; 15'; 15'') aufweist, die eine radiale Aufweitung beziehungsweise Stauchung des Konusringes erlaubt.

2. Konusring nach Anspruch 1,
**dadurch gekennzeichnet, dass** die Dehnungsstelle durch eine Unterbrechungsstelle (15) gebildet wird.

3. Konusring nach Anspruch 2,
**dadurch gekennzeichnet, dass** die an der Unterbrechungsstelle (15) aufeinanderstoßenden Enden des Konusringes (4) so verzahnt sind, dass sie in axialer Richtung nicht gegeneinander verschoben werden können.

4. Konusring nach einem der Ansprüche 2 oder 3,
**dadurch gekennzeichnet, dass** die an der Unterbrechungsstelle (15) aufeinanderstoßenden Enden des Konusringes (4) so verzahnt sind, dass sie in Umfangsrichtung nur um ein begrenztes Maß gegeneinander verschiebbar sind.

5. Konusring nach einem der Ansprüche 1 bis 4,
**dadurch gekennzeichnet, dass** er im Bereich (d) der Dehnungsstelle in radialer Richtung dünner (e) ausgebildet ist.

6. Konusring nach mindestens einem der Ansprüche 2 bis 5,
**dadurch gekennzeichnet, dass** ein erstes Ende der an der Unterbrechungsstelle (15) aufeinanderstoßenden Enden des Konusringes (4) mindestens einen Vorsprung (17; 17'; 17''; 17''') aufweist, welcher in eine korrespondierende, in Umfangsrichtung verlaufende Nut (16, 16') an dem zweiten Ende der an der Unterbrechungsstelle aufeinanderstoßenden Enden des Konusringes eingreift.

7. Konusring nach Anspruch 6,
**dadurch gekennzeichnet, dass** die Nut (16') hinterschnitten ausgebildet ist, und dass der Vorsprung (17'; 17''; 17''') am äußeren Ende eine Verbreiterung (18) aufweist, welche breiter ist als die Eingangsöffnung der Nut.

8. Schaltgetriebe mit Synchronisiereinrichtung, enthaltend
- eine Getriebewelle,
- einen auf der Getriebewelle drehfest angeordneten Synchronkörper (6),
- eine auf dem Synchronkörper drehfest und axial verschiebebeweglich angeordnete Schiebemuffe (2) mit einer Innenverzahnung (10),
- mindestens ein auf der Getriebewelle drehbar angeordnetes Gangrad (1) mit einer Schaltverzahnung (8), mit welcher die Innenverzahnung (10) der Schiebemuffe bei der axialen Verschiebung der Schiebemuffe in Eingriff gebracht werden kann, und
- eine Synchronisiereinrichtung zur Anpassung unterschiedlicher Drehgeschwindigkeiten zwischen Schiebemuffe einerseits und Gangrad einerseits, mit einem Außensynchronring (3) und einem Innensynchronring (5), die mit dem Synchronkörper gekoppelt sind, sowie mit einem Konusring (4), welcher mit dem Gangrad gekoppelt ist und eine Außenreibfläche (13) sowie eine Innenreibfläche (14) aufweist, welche mit entsprechenden Reibflächen am Außensynchronring beziehungsweise am Innensynchronring zusammenwirken,
**dadurch gekennzeichnet, dass**
der Konusring (4) nach mindestens einem der Ansprüche 1 bis 7 ausgestaltet ist und dass der Außensynchronring (3) und der Innensynchronring (5) zum Konusring passend ausgestaltet sind.

9. Schaltgetriebe nach Anspruch 8,
**dadurch gekennzeichnet, dass** die Außenreibfläche (13) und die Innenreibfläche (14) des Konusringes (4) kegelstumpfförmig sind mit unterschiedlichen Kegelwinkeln (α, β).

10. Schaltgetriebe nach Anspruch 8 oder 9,
**dadurch gekennzeichnet, dass** es so ausgelegt ist, dass bei Ausführung eines Schaltvorganges der Konusring (4) zuerst mit dem Außensynchronring (3) in Berührung kommt, bevor er mit dem Innensynchronring (5) in Berührung kommt.

## Claims

1. Conical ring for the synchronisation device of a manual gearbox wherein the conical ring has an outer friction surface for friction contact with an outer synchronous ring of the manual gearbox as well as an inner friction surface for friction contact with an inner synchronous ring of the manual gearbox,
**characterised in that** the periphery of the conical ring (4) has an expansion point (15; 15'; 15'') which allows radial widening or compression of the conical ring.

2. Conical ring according to claim 1,
**characterised in that** the expansion point is formed by a break point (15).

3. Conical ring according to claim 2,
**characterised in that** the ends of the conical ring (4) impacting upon each other at the break point (15) are toothed in such a way that they cannot be displaced against each other in axial direction.

4. Conical ring according to one of the claims 2 or 3,
**characterised in that** the ends of the conical ring (4) impacting upon each other at the break point (15) are toothed in such a way that they can only be displaced against each other to a limited extent in the peripheral direction.

5. Conical ring according to one of the claims 1 to 4,
**characterised in that** in the region (d) of the expansion point it has a thinner formation (e) in radial direction.

6. Conical ring according to at least one of the claims 2 to 5, **characterised in that** a first end of the ends of the conical ring (4) impacting upon each other at the break point (15) has at least one projection (17: 17'; 17''; 17''') which engages in a corresponding groove (16, 16') running in peripheral direction on the second end of the ends of the conical ring impacting upon each other at the break point.

7. Conical ring according to claim 6,
**characterised in that** the groove (16') is formed in a recessed way and that the projection (17'; 17"; 17''') has a widened area (18) on the outer end which is broader than the entry opening of the groove.

8. Manual gearbox with synchronisation device, containing
- a gear shaft
- a synchronous body (6) arranged in a rotationally secure way on the gear shaft
- a sliding sleeve (2) arranged in a rotationally secure way on the synchronous body and axially displaceable way and with inner toothing (10)
- at least one gear wheel (1) arranged in a rotating way on the gear shaft with switching toothing (8), with which the inner toothing (10) of the sliding sleeve during the axial displacement of the sliding sleeve can be brought into engagement, and
- a synchronisation device for adaptation to different rotation speeds between sliding sleeve on the one hand and gear wheel on the other, with an outer synchronous ring (3) and an inner synchronous ring (5) which are coupled with the synchronous body, and with a conical ring (4) which is coupled with the gear wheel and has an outer friction surface (13) and an inner friction surface (14) which work in association with corresponding friction surfaces on the outer synchronous ring or on the inner synchronous ring,
**characterised in that**
the conical ring (4) is formed according to at least one of the claims 1 to 7 and that the outer synchronous ring (3) and the inner synchronous ring (5) are formed adapted to the conical ring.

9. Manual gearbox according to claim 8,
**characterised in that** the outer friction surface (13) and the inner friction surface (14) of the conical ring (4) are formed as a truncated cone with different cone angles (α, β).

10. Manual gear box according to claim 8 or 9,
**characterised in that** it is designed in such a way that during execution of a switching process the conical ring (4) firstly comes into contact with the outer synchronous ring (3) before it comes into contact with the inner synchronous ring (5).

## Revendications

1. Bague conique pour le synchroniseur d'une boîte de vitesses, la bague conique présentant une surface de friction extérieure pour un contact de friction avec une bague de synchronisation extérieure de la boîte de vitesses, et une surface de friction intérieure pour un contact de friction avec une bague de synchronisation intérieure de la boîte de vitesses,
**caractérisée en ce que** le pourtour de la bague conique (4) présente un point d'expansion (15 ; 15' ; 15") qui permet un élargissement ou respectivement un rétrécissement radial de la bague conique.

2. Bague conique selon la revendication 1, **caractérisée en ce que** le point d'expansion est formé par un point d'interruption (15).

3. Bague conique selon la revendication 2, **caractérisée en ce que** les extrémités de la bague conique (4) qui se rencontrent au point d'interruption (15) sont dentées de telle sorte qu'elles ne peuvent pas être déplacées l'une par rapport à l'autre en direction axiale.

4. Bague conique selon la revendication 2 ou 3, **caractérisée en ce que** les extrémités de la bague conique (4) qui se rencontrent au point d'interruption (15) sont dentées de telle sorte qu'elles ne peuvent être déplacées que dans une mesure limitée l'une par rapport à l'autre en direction circonférentielle.

5. Bague conique selon l'une des revendications 1 à 4, **caractérisée en ce qu'**elle est réalisée plus mince (e) en direction radiale dans la région (d) du point d'expansion.

6. Bague conique selon au moins une des revendications 2 à 5, **caractérisée en ce qu'**une première des extrémités de la bague conique (4) qui se rencontrent au point d'interruption (15) présente au moins une saillie (17 ; 17' ; 17" ; 17"'), qui s'engage dans une rainure correspondante (16, 16'), s'étendant en direction circonférentielle, prévue sur la deuxième des extrémités de la bague conique qui se rencontrent au point d'interruption

7. Bague conique selon la revendication 6, **caractérisée en ce que** la rainure (16') est réalisée contre-dépouillée, et **en ce que** la saillie (17 ; 17' ; 17" ; 17''') présente à l'extrémité extérieure un élargissement (18) qui est plus large que l'ouverture d'entrée de la rainure.

8. Boîte de vitesses équipée d'un synchroniseur, contenant
- un arbre de boîte de vitesses,
- un moyeu de synchroniseur (6) disposé en solidarité de rotation sur l'arbre de boîte de vitesses,
- un manchon coulissant (2), disposé en solidarité de rotation et à coulissement axial sur le moyeu de synchroniseur et pourvu d'une denture intérieure (10),
- au moins un pignon de rapport (1), disposé à rotation sur l'arbre de boîte de vitesses et pourvu d'une denture de commutation (8) avec laquelle la denture intérieure (10) du manchon coulissant peut être amenée en prise lors du coulissement axial du manchon coulissant, et
- un synchroniseur pour ajuster les vitesses de rotation différentes du manchon coulissant d'une part et du pignon de rapport d'autre part, avec une bague de synchronisation extérieure (3) et une bague de synchronisation intérieure (5), qui sont couplées au moyeu de synchroniseur, et avec une bague conique (4) qui est couplée au pignon de rapport et qui présente une surface de friction extérieure (13) ainsi qu'une surface de friction intérieure (14), qui coopèrent avec des surfaces de friction correspondantes respectivement sur la bague de synchronisation extérieure et sur la bague de synchronisation intérieure,
**caractérisée en ce que** la bague conique (4) est configurée selon au moins une des revendications 1 à 7, et **en ce que** la bague de synchronisation extérieure (3) et la bague de synchronisation intérieure (5) sont configurées d'une manière adaptée à la bague conique.

9. Boîte de vitesses selon la revendication 8, **caractérisée en ce que** la surface de friction extérieure (13) et la surface de friction intérieure (14) de la bague conique (4) sont réalisées tronconiques, avec des angles de cône différents (α, β).

10. Boîte de vitesses selon la revendication 8 ou 9, **caractérisée en ce qu'**elle est conçue de telle sorte que, lors de l'exécution d'un changement de vitesse, la bague conique (4) entre d'abord en contact avec la bague de synchronisation extérieure (3), avant d'entrer en contact avec la bague de synchronisation intérieure (5).
